# EUROPÄISCHE PATENTSCHRIFT

(11) **EP 0 632 076 B1**
(45) Veröffentlichungstag und Bekanntmachung des Hinweises auf die Patenterteilung: **26.08.1998**
(21) Anmeldenummer: 94109875.8
(22) Anmeldetag: 27.06.1994
(51) Int. Cl.: C08G 18/10, C08G 18/08, C08G 18/44, C08G 18/76, C08G 18/72, C09D 175/04, C08G 18/12

(54) **Verfahren zur Mehrschichtlackierung**
Process for preparing multilayer coatings
Procédé de revêtement multicouche

(30) Priorität: 29.06.1993 DE 4321534
(43) Veröffentlichungstag der Anmeldung: 04.01.1995
(73) Patentinhaber: Herberts Gesellschaft mit beschränkter Haftung, 42285 Wuppertal (DE)
(72) Erfinder: Brock, Thomas, Dr., D-50354 Hürth (DE); Wandelmaier, Klaus, Dr., D-42111 Wuppertal (DE)
(74) Vertreter: Türk, Gille, Hrabal, Leifert

(56) Entgegenhaltungen:
- EP-A- 0 000 568
- EP-A- 0 512 523
- EP-A- 0 512 524
- DE-A- 2 822 394
- DE-A- 3 903 804

## Beschreibung

Die Erfindung betrifft ein Verfahren zur Herstellung von Mehrschichtlackierungen durch Auftrag einer Basislackschicht aus wäßrigen Überzugsmitteln auf ein Substrat und anschließenden Auftrag eines Klarlacks auf der Basis organischer Lösemittel. Es werden Überzüge mit ausgezeichnetem Glanz und hervorragender Härte erzielt.

Aus Umweltschutzgründen ist man bestrebt, die Lösemittelemission bei Beschichtungsprozessen merkbar zu reduzieren. Bei der Applikation von Basislacken ist aufgrund der festkörperarmen Formulierungen die Lösemittelemission besonders hoch. Deshalb ist es von besonderer Bedeutung, herkömmliche lösemittelhaltige Basislacke durch wäßrige Systeme zu ersetzen.

In der DE-A-41 15 015 und DE-A-41 15 042 werden physikalisch trocknende Überzugsmittel auf wäßriger Basis, insbesondere für die Herstellung von Metallic-Überzügen und für die Herstellung von unifarbenen Überzügen, beschrieben. Die Metallic-Lacke enthalten mindestens ein Bindemittel, basierend auf Carbonatgruppierungen enthaltenden Polyurethanen mit einem zahlenmittleren Molekulargewicht (Mn) von 70000 bis 500000 und weiteren Polyurethanen mit einem Mn von 20000 bis 60000. Zur Herstellung der unifarbenen Überzüge werden Bindemittelmischungen auf Basis Carbonatgruppierungen enthaltender Polyurethane mit einer Glasübergangstemperatur (Tg) kleiner 0°C und ungesättigter Reaktionsprodukte von carboxyfunktionellen Polykondensaten mit ethylenisch ungesättigten Monomeren mit einer Glasübergangstemperatur größer 0°C eingesetzt.

Derartige physikalisch trocknende Überzugsmittel sind aufgrund ihrer Fähigkeit, bei Raumtemperatur bzw. bei geringfügigem Erwärmen, beispielsweise auf bis zu 60°C, auszuhärten, besonders für Reparaturlackierungen von Kraftfahrzeugen geeignet. Sie können nach der Applikation mit transparenten Decklacken beschichtet werden. Die Beschichtung kann naß-in-naß nach kurzem Ablüften oder nach Trocknen der Basislackschicht erfolgen. Als Klarlack kommen übliche transparente Lacke aus dem Kraftfahrzeugsektor zur Anwendung. Hierbei handelt es sich insbesondere um Zweikomponentenlacke auf Acrylat/Isocyanat-Basis in konventionellen Formulierungen.

Es ist bisher allgemein beschrieben worden, daß bei rein physikalisch trocknenden wäßrigen Polyurethandispersionen die Eigenschaften der erzielten Filme durch Zusatz spezieller dispergierbarer Polyisocyanate verbessert werden können (Lacke und Farben, Heft 10/1992, Information BAYER). Es wird nicht angegeben, um welche speziellen Polyisocyanate es sich dabei handelt und unter welchen Bedingungen konkrete Eigenschaften verbessert werden können.

In der DE-A-27 88 442 werden wäßrige Dispersionen von anionisch, kationisch oder nicht-ionisch hydrophil modifizierten Polyurethanen beschrieben. Diesen wäßrigen Dispersionen werden zur Modifizierung der anwendungstechnischen Eigenschaften bei Raumtemperatur flüssige organische Diisocyanate mit einem maximalen mittleren Molekulargewicht von 400 in einer Menge von 1,5 - 80 Gew.-% und im Falle der Verwendung von Hexamethylendiisocyanat in einer Menge von 1,5 - 5 Gew.-%, bezogen auf den Gesamtfeststoffanteil der Dispersion, zugesetzt. Der Zusatz der Diisocyanate muß unter Durchmischen bei einer Temperatur zwischen 0 und 50°C erfolgen. Die Temperatur muß solange aufrechterhalten werden, bis mindestens 50 % der Isocyanatgruppen des Diisocyanats abreagiert sind. Die Umsetzung wird anschließend gegebenenfalls durch Erhitzen auf bis zu 100°C zu Ende geführt. Die genaue Einhaltung der genannten Temperaturbedingungen ist nach der Beschreibung zur Erreichung des angestrebten Effekts, einer Umhüllung der in der Dispersion vorliegenden Latexteilchen mit einer Polyharnstoffschicht, wesentlich. Diese Dispersionen werden vorwiegend zur Beschichtung von Leder, Papier und Textilien verwendet, deren Eigenschaften, Zugfestigkeit, Reibechtheit, Wasser- und Hochtemperaturbeständigkeit und Griff verbessert werden.

Ein Nachteil der bisher bekannten Mehrschichtaufbauten unter Verwendung von wäßrigen Basislacken auf der Grundlage von physikalisch trocknenden Polyurethanen besteht jedoch darin, daß nach dem Überlackierungen mit Klarlack eine ungenügende Härte der Basislackschicht und damit der gesamten Decklackschicht resultiert. Besonders bei höheren Schichtdicken (von etwa 40 µm und mehr) bleibt der Basislack zu weich. Auch der erzielte Glanz und die Wasserbeständigkeit bleiben unbefriedigend.

Aufgabe der Erfindung ist es daher, Mehrschichtlackierungen unter Verwendung von Wasserbasislacken (uni und metallic) und Überlackierung mit lösemittelhaltigen Klarlacken bereitzustellen, ohne dabei im Vergleich mit der Verwendung konventioneller lösemittelhaltiger Basislacke Einbußen an Glanz und Härte hinnehmen zu müssen.

Es hat sich gezeigt, daß diese Aufgabe gelöst werden kann durch das einen Gegenstand der Erfindung bildende Verfahren zur Herstellung einer Mehrschichtlackierung durch Auftrag einer Basislackschicht aus einem wäßrigen Überzugsmittel auf ein Substrat und anschließenden Auftrag einer Schicht aus einem organische Lösemittel enthaltenden Klarlack, das dadurch gekennzeichnet ist, daß man zur Herstellung der Basislackschicht ein wäßriges Überzugsmittel aufträgt, das neben Wasser, einem oder mehreren Pigmenten, sowie gegebenenfalls einem oder mehreren organischen Lösemitteln, Neutralisationsmitteln und lacküblichen Additiven als Bindemittel enthält:
eine Kombination von
I) 99, 5 bis 85 Gew.-% eines oder mehrerer wäßriger, physikalisch trocknender Polyurethan-Bindemittel mit einem derartigen Gehalt an OH-Gruppen und Säurefunktionen, daß die OH-Zahl 10 und die Säurezahl 30 nicht überschritten werden, wovon 10 bis 50 Gew.-%, bezogen auf das Festkörpergewicht der Komponente I) ersetzt sein können durch ein oder mehrere ungesättigte Reaktionsprodukte von carboxyfunktionellen Polykondensaten mit ethylenisch ungesättigten Monomeren, und
II) 0,5 bis 15 Gew.-% eines oder mehrerer bei Raumtemperatur flüssiger oder durch organische Lösemittel verflüssigter Polyisocyanate mit mehr als einer freien Isocyanatgruppe mit aus der Gruppe der Diisocyanate der allgemeinen Formel 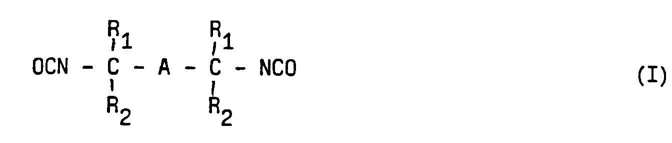 worin die Reste R₁ und R₂ jeweils gleich oder verschieden sein können und wobei
   - R₁ =: -H oder -CₙH₂ₙ₊₁
   - R₂ =: -CₙH₂ₙ₊₁
   wobei n = eine ganze Zahl von 1 bis 6 und
   - A =: eine einfache Bindung, ein aromatischer oder alicyclischer Rest, oder ein linearer oder verzweigter aliphatischer Rest mit 1 bis 12 Kohlenstoffatomen ist deren Umsetzungsprodukte mit Wasser oder mehrwertigen Alkoholen, deren Uretdione, Isocyanate und/oder Biurete, wobei bis 40 Gew.-%, bezogen auf das Festkörpergewicht der Polyisocyanatkomponente II durch ein oder mehrere, bei Raumtemperatur flüssige oder durch organische Lösemittel verflüssigte, davon verschiedene Polyisocyanate mit mehr als einer freien Isocyanatgruppe ersetzt sein können,
   wobei sich die Gew.-% der Komponenten I) und II) jeweils auf deren Festkörper beziehen und auf 100 Gew.-% addieren und wobei die Komponente II) dem Überzugsmittel kurz vor dessen Auftrag zugesetzt wird,
   und daß man auf den so erhaltenen Basisüberzug nach dem Trocknen oder naß-in-naß die Klarlackschicht aufbringt und gegebenenfalls zusammen mit der Basislackschicht aushärtet.

Die Komponente I des erfindungsgemäß eingesetzten Bindemittels wird vorzugsweise in einer Menge von 99 bis 90 Gew.-% zusammen mit bevorzugt 1 bis 10 Gew.-% der Komponente II eingesetzt, wobei sich die Gew.-% auf 100 Gew.-% addieren.

Es wurde gefunden, daß durch Zusatz der vorstehend definierten speziellen Polyisocyanate II zu physikalisch trockenden Wasserbasislacken auf Polyurethanbasis im Mehrschichtaufbau, das heißt nach Überlackieren mit lösemittelhaltigen, insbesondere zweikomponentigen, Klarlacken, insbesondere auf Polyacrylat/Polyisocyanat-Basis, sehr gute Härte des Gesamtaufbaus, insbesondere bei hohen Schichtdicken des Basislackes, sowie ausgezeichneter Glanz erzielt werden.

Bei den verwendbaren wäßrigen, physikalisch trocknenden Polyurethan-Bindemitteln handelt es sich um solche, wie sie beispielsweise in an sich bekannten Wasserbasislacken, wie Effektlacken (Metallic- und Perlmuttlacke) oder unifarbenen Lacken auf Polyurethanbasis eingesetzt werden. Im Prinzip ist es möglich, die Polyisocyanatkomponente II bekannten Wasserbasislacken, die der vorstehenden Spezifikation der Polyurethan-Bindemittel entsprechen, zuzusetzen.

Beispiele für verwendbare Polyurethan-Basislacke, sind solche, die Bindemittel oder Bindemittelgemische enthalten, basierend auf
A) einem oder mehreren, Carbonatgruppierungen enthaltenden Polyurethanen mit einem Zahlenmittel der Molmasse (Mn) von 70000 bis 500000 und
B) einem oder mehreren weiteren Polyurethanen mit Mn von 20000 bis 60000.

Derartige Polyurethan-Basislacke sind besonders geeignet als Effekt-Basislacke, z.B. Metallic-Basislacke. Sie enthalten beispielsweise 8 bis 30 Gew.-%, bezogen auf den applikationsfertigen Lack, des vorstehend definierten Bindemittelgemisches A) + B).

In dem Bindemittelgemisch können die Polyurethane mit Mn 70000 bis 500000 zu 50 - 90 Gew.-% und die Polyurethane mit Mn 20000 - 60000 zu 10 - 50 Gew.-%, jeweils in Form wäßriger Dispersionen, enthalten sein (wobei sich die Gew.-% jeweils auf den Harzfestkörper beziehen).

Komponente A) ist erhältlich durch Umsetzung von
a) 10 bis 40 Gew.-% eines oder mehrerer organischer Polyisocyanate, die keine hydrophilen oder in hydrophile Gruppen überführbare Gruppen aufweisen,
b) 40 bis 80 Gew.-% einer oder mehrerer höhermolekularer organischer Polyhydroxyverbindungen, die keine hydrophilen oder in hydrophile Gruppen überführbare Gruppen aufweisen, und die zumindest zu 50 Gew.-% aus einem oder mehreren Polyhydroxypolycarbonaten bestehen,
c) 0,2 bis 18 Gew.% einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,
d) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen, und
e) 0 bis 8 Gew.-% einer oder mehrerer nicht-ionisch-hydrophiler Verbindungen, die mindestens eine Isocyanatgruppe oder mindestens eine gegenüber Isocyanatgruppen reaktionsfähige Gruppe aufweisen.

Bevorzugt weisen die als Komponente A) eingesetzten Polyurethane mindestens 200 Milliäquivalente pro 100 g Feststof an chemisch eingebauten Carbonatgruppierungen -O-CO-O- auf. Sie enthalten bevorzugt nicht mehr als ingesamt 320 Milliäquivalente pro 100 g Feststoff an chemisch eingebauten Urethangruppierungen -NH-CO-O- und gegebenenfalls chemisch eingebauten Harnstoffgruppierungen -NH-CO-NH-.

Beispiel für als Komponente B) eingesetzte Polyurethane sind solche, die erhältlich sind durch Umsetzung von
a) 10 bis 40 Gew.% eines oder mehrerer organischer Polyisocyanate, die keine hydrophilen oder in hydrophile Gruppen überführbare Gruppen aufweisen,
b) 40 bis 80 Gew.-% einer oder mehrerer höhermolekularer organischer Polyhydroxylverbindungen, die keine hydrophilen oder in hydrophile Gruppen überführbare Gruppen aufweisen,
c) 0,2 bis 18 Gew.-% einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen und
d) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen.

Derartige Polyurethane, ihre Herstellung und Verwendung in Wasserbasislacken sind in der DE-A-41 15 042 ausführlich beschrieben.

Ein weiteres Beispiel für die erfindungsgemäß einsetzbare Polyurethan-Bindemittelkomponente I sind Bindemittel bzw. Bindemittelgemische auf der Basis von C) einem oder mehreren, Carbonatgruppierungen enthaltenden Polyurethanen mit einer Glasübergangstemperatur kleiner 0°C und D) einem oder mehreren ungesättigten Reaktionsprodukten von carboxyfunktionellen Polykondensaten mit ethylenisch ungesättigten Monomeren mit einer Glasübergangstemperatur größer 0°C. Die Polyurethane mit der Glasübergangstemperatur kleiner 0°C können z.B. zu 50 - 90 Gew.-% und die ungesättigten Reaktionsprodukte mit einer Glasübergangstemperatur größer 0°C zu 10 - 50 Gew.-%, jeweils in Form der wäßrigen Dispersionen, enthalten sein. Dabei beziehen sich die Gew.-% auf den Bindemittelfestkörper und addieren sich zu 100 %.

Derartige Bindemittelsysteme sind insbesondere zur Herstellung von unifarbenen Überzügen geeignet. Bevorzugt enthalten solche Überzüge 5 bis 30 Gew.-% des Bindemittels bzw. Bindemittelgemisches, bezogen auf das Gewicht des applikationsfertigen Überzugsmittels.

Beispiele für die Komponente C) sind solche, die erhältlich sind durch Umsetzung von
a) 10 bis 40 Gew.-% eines oder mehrerer organischer Polyisocyanate, die keine hydrophilen oder in hydrophile Gruppen überführbare Gruppen aufweisen,
b) 40 bis 80 Gew.-% einer oder mehrerer höhermolekularer organischer Polyhydroxyverbindungen, die keine hydrophilen oder in hydrophile Gruppen überführbare Gruppen aufweisen, und die zumindest zu 50 Gew.-% aus einem oder mehreren Polyhydroxypolycarbonaten bestehen,
c) 0,2 bis 18 Gew.-% einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,
d) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen, und
e) 0 bis 8 Gew.-% einer oder mehrerer nicht-ionisch-hydrophiler Verbindungen, die mindestens eine Isocyanatgruppe oder mindestens eine gegenüber Isocyanatgruppen reaktionsfähige Gruppen aufweisen.

Bevorzugt weisen die als Komponente C) eingesetzten Polyurethane mindestens 200 Milliäquivalent pro 100 g Feststoff an chemisch eingebauten Carbonatgruppierungen -O-CO-O- auf. Sie enthalten bevorzugt nicht mehr als insgesamt 320 Milliäquivalent pro 100 g Feststoff an chemisch eingebauten Urethangruppierungen -NH-CO-O- und gegebenenfalls chemisch eingebauten Harnstoffgruppierungen -NH-CO-NH-.

Die als Komponente D) eingesetzten ungesättigten Reaktionsprodukte sind erhältlich durch Umsetzung von
f) 5 bis 95 Gew.-% eines carboxyfunktionellen Polykondensats, das zusätzlich Epoxygruppen enthält,
g) 95 bis 5 Gew.-% minestens eines copolymerisierbaren alpha,betaolefinisch ungesättigten Monomeren, und
h) 0 bis 20 Gew.-% üblicher Hilfsstoffe für die Polymerherstellung, wobei sich die Mengenangaben der Bestandteile f) bis h) auf den Festkörperanteil der Komponente D) beziehen und ihre Summe stets 100 Gew.-% beträgt.

Derartige Polyurethane bzw. Gemische, ihre Herstellung und Verwendung in Wasserbasislacken sind in der DE-A-41 15 042 ausführlich beschrieben.

Weitere Beispiele für erfindungsgemäß einsetzbare Polyurethanbindemittel sind solche auf Basis acrylierter Polyurethane, wie sie in DE-A-41 22 265 beschrieben sind. Auch Kombinationen der genannten Bindemittel sind möglich.

Die erfindungsgemäß eingesetzten uni- oder metallicfarbenen Überzugsmittel auf Wasserbasis enthalten beispielsweise etwa 5 bis 35 Gew.-% Bindemittelanteil (bestehend aus den Komponenten I und II), 50 bis 85 Gew.-% Wasser, 1 bis 20 Gew.-% eines oder mehrerer wassermischbarer Lösemittel, z.B. Alkohole, wie Butanol, Isopropanol, Glykole, wie Butylglykol, Ethylenglykol, aromatische Kohlenwasserstoffe, wie Solvesso, Etheralkohole, wie Butoxypropanol, Methoxypropanol, Methoxypropylacetat, sowie 0,3 - 25 Gew.-% Pigmente, sowie gegebenenfalls Neutralisationsmittel und übliche Additive in benötigten, üblichen Anteilen.

Bei den Pigmenten kann es sich um deckende, transparente oder effektgebende Pigmente handeln. Zur Formulierung eines Metallic-Basislackes sind beispielsweise 0,3 - 4 Gew.-% eines oder mehrerer Metallpigmente und 0 - 10 Gew.-% eines oder mehrerer färbender oder effektgebender Pigmente enthalten. Zur Formulierung von Uni-Basislacken sind bevorzugt 5 - 20 Gew.-% an Pigmenten enthalten.

Die Wasserbasislacke enthalten Neutralisationsmittel zur teilweisen Neutralisation von neutralisierbaren Gruppen. Der Neutralisationsgrad neutralisierbarer Gruppen beträgt bevorzugt 40 - 120 % der neutralisierbaren Gruppen und liegt insbesondere unter 100 %. Als Neutralisationsmittel kommen auf dem Lacksektor übliche Basen wie Ammoniak, N,N-Dimethylethanolamin oder tert.Amine, wie Triethylamin, Triethanolamin, N-Methylmorpholin in Frage.

Die Wasserbasislacke enthalten weiterhin gegebenenfalls übliche Additive und Hilfsstoffe, wie sie auf dem Lacksektor eingesetzt werden. Derartige Hilfsmittel und Additive sind Verdicker, die Rheologie beeinflussende Zusätze, Antischaummittel, Korrosionsinhibitoren (beispielsweise zur Inhibierung der Gasung von Metallpigmenten). Die Additive und Hilfsstoffe werden in üblichen, dem Fachmann geläufigen Mengen zugesetzt.

Für das erfindungsgemäße Verfahren werden zunächst Wasserbasislacke bereitet, die sämtliche Komponenten mit Ausnahme der Polyisocyanatkomponente II enthalten. Den so teilweise fertiggestellten Wasserbasislacken werden erfindungsgemäß erst kurz vor der Applikation 0,5 - 15 Gew.-%, vorzugsweise 1 - 10 Gew.-%, bezogen auf den Festkörperanteil des Bindemittels, eines oder mehrerer sterisch gehinderter Polyisocyanatemit mehr als einer freien Isocyanatgruppe aus der Gruppe der Diisocyanate der allgemeinen Formel 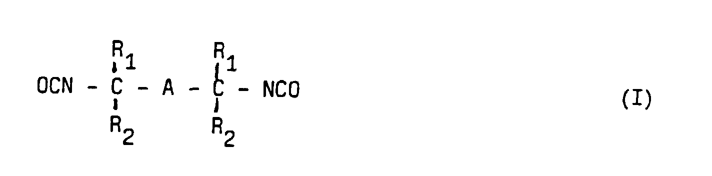 und/oder von davon abgeleiteten Polyisocyanate entsprechend Anspruch 1 mit mehr als einer freien Isocyanatgruppe, worin die Reste R₁ und R₂ jeweils gleich oder verschieden sein können und R₁ = H oder vorzugsweise -CₙH₂ₙ₊₁.

R₂ = -CₙH₂ₙ₊₁

wobei n = eine ganze Zahl von 1 bis 12, vorzugsweise 1 bis 4 und
- A =: eine einfache Bindung, ein aromatischer oder alicyclischer Rest, oder ein linearer oder verzweigter aliphatischer Rest mit 1 bis 12 Kohlenstoffatomen ist,
die im Gemisch mit bis zu 40 Gew.-%, bezogen auf den Festkörpergehalt der gesamten Polyisocyanate eines oder mehrerer Polyisocyanate mit mehr als einer freien Isocyanatgruppe, die bei Raumtemperatur flüssig sind oder durch Zusatz organischer Lösemittel verflüssigt sind, vorliegen können, zugesetzt.

Die aromatischen Reste A haben beispielsweise 6 oder 10 C-Atome; ein Beispiel ist der Phenylenrest. Alicyclische Reste A haben beispielsweise 5 oder 6 C-Atome, bevorzugt ist der Cyclohexylenrest. Die aromatischen und alicyclischen Reste können unsubstituiert oder substituiert sein, beispielsweise durch einen oder mehrere Alkylreste mit 1 bis 4 C-Atomen.

Besonders bevorzugt werden sterisch gehinderte Polyisocyanate mit 4 bis 25, vorzugsweise 4 bis 16 C-Atomen, die in 2-Stellung zur NCO-Gruppe eine oder zwei lineare, verzweigte oder cyclische Alkylgruppen mit 1 bis 12, bevorzugt 1 bis 4 C-Atomen, enthalten.

Bevorzugt sind die Di- und Polyisocyanate bei Raumtemperatur flüssig. Bevorzugt weisen die flüssigen oder verflüssigten Polyisocyanate bei Raumtemperatur (23°C) eine Viskosität von 1 bis 6000 mPa.s, vorzugsweise über 5 und unter 3000 mPa.s, besonders bevorzugt über 5 und unter 1000 mPa.s auf. Die mittlere Funktionalität der Polyisocyanate beträgt bevorzugt 1,5 bis 5 reaktive Isocyanatgruppen pro Molekül, besonders bevorzugt mindestens 2 und höchstens 3. Sie haben bevorzugt einen NCO-Gehalt von über 5 Gew.-%, bevorzugt unter 35 Gew.-%, besonders bevorzugt unter 25 Gew.-%.

Bei den von den Diisocyanaten der allgemeinen Formel I abgeleiteten Polyisocyanaten handelt es sich beispielsweise um NCO-haltige Prepolymere, die aus den Diisocyanaten durch Umsetzung mit niedermolekularen polaren Verbindungen erhalten werden können. Durch anteilweisen Einbau von Polyethylenoxidresten oder ionisierbaren Gruppen kann beispielsweise die Emulgierbarkeit erhöht werden.

Weitere Beispiele für von den Diisocyanaten der allgemeinen Formel I abgeleitete Polyisocyanate sind höhere Homologe bzw. modifizierte Derivate davon.

Höhere Homologe der sterisch behinderten Diisocyanate nach Formel I können beispielsweise durch Umsetzung von überschüssigem Diisocyanat mit Wasser, mehrwertigen Polyalkoholen, wie Glycerin, Trimethylolpropan, Pentaerythrit oder geeigneten OH-Oligomeren und anschließende destillative Entfernung des nicht umgesetzten Diisocyanat-Überschusses erhalten werden. Weitere einsetzbare Polyisocyanate sind Uretdione oder Isocyanurate der Diisocyanate. Bei ihrer Herstellung entstehen je nach gewählter Katalysierung Gemische aus Uretdion- und/oder Isocyanurat-Gruppen aufweisenden Polyisocyanaten. Ein Beispiel für einen weiteren Modifizierungsweg ist die Reaktion mit definierten Wassermengen unter Bildung von Biureten.

Bei der Modifizierung der sterisch gehinderten Diisocyanate der allgemeinen Formel I können im Gemisch normale, das heißt sterisch nicht behinderte Polyisocyanate mitverwendet werden. Dabei werden im Gemisch bevorzugt bis 40 Gew.-% sterisch nicht gehinderte Diisocyanate eingesetzt, wobei sich die Gew.-% auf die gesamten Polyisocyanate beziehen. Ein erfindungsgemäß geeignetes Prepolymer kann auch durch Einpolymerisieren einer Verbindung erhalten werden, die neben einer radikalisch oder ionisch polymerisierbaren Doppelbindung noch mindestens eine sterisch gehinderte Isocyanatgruppe enthält wie beispielsweise Allylmonoisocyanat, Vinyl-phenylisocyanat, (Meth)acrylsäure-β-isocyanato-ethylester, (Meth)acryloyl-isocyanat oder bevorzugt m- oder p-Isopropenyl-, -di-methylbenzylisocyanat. Zur Verbesserung der Emulgierbarkeit können die Polyisocyanate mit hydrophilen Gruppen, wie Carboxylgruppen oder Polyethergruppen modifiziert sein.

Beispiele für die verwendbaren sterisch gehinderten Diisocyanate sind 1,1,6,6-Tetramethyl-hexamethylendiisocyanat-, 1,6,-Dibutyl-perntamethylendiisocyanat-1,5, 1,4-Dimethyl-cyclohexandiisocyanat-1,4, p- oder m-Tetramethylxylylendiisocyanat der Formeln 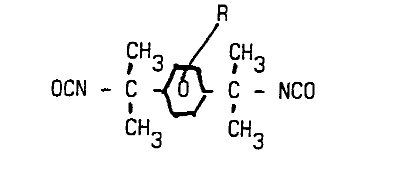 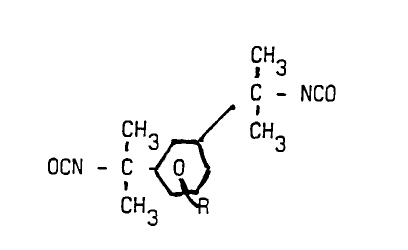 worin R die Bedeutung von H oder C₁ - C₄ -Alkyl hat und die entsprechenden hydrierten Homologen. Diese Diisocyanate können auch zu höherfunktionellen Verbindungen umgesetzt sein, beispielsweise durch Trimerisierung zu Isocyanuraten, durch Umsetzung mit Wasser oder mit Trimethylolpropan. Tetramethylxylyldiisocyanat und sein Reaktionsprodukt mit Trimethylolpropan werden besonders bevorzugt.

Die Polyisocyanatkomponente kann als Gemisch verschiedener Polyisocyanate, z.B. als beliebige Mischung der vorstehend als Beispiele genannten Di- und Polyisocyanate vorliegen. Mischungen aus zwei- und höherfunktionellen Polyisocyanaten sind bevorzugt.

Die sterisch behinderten Diisocyanate der allgemeinen Formel I und die davon abgeleiteten Polyisocyanate können im Gemisch mit einem oder mehreren Polyisocyanaten mit mehr als einer freien Isocyanatgruppe vorliegen. Es handelt sich hierbei bevorzugt um solche, deren Isocyanatgruppen sterisch nicht behindert sind. Es handelt sich hierbei um beliebige organische Polyisocyanate mit aliphatisch, cycloaliphatisch, araliphatisch und/oder aromatisch gebundenen, freien Isocyanatgruppen, die bei Raumtemperatur flüssig sind, was gegebenenfalls durch Zusatz organischer Lösemittel bewirkt wird. Bevorzugt handelt es sich um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3.

Bevorzugt werden die vorstehend beschriebenen Polyisocyanate bzw. ihre Gemische vor dem Zusatz zu den genannten Wasserbasislacken in geeigneten organischen Lösemitteln vorgelöst. Die Lösemittel sollen wassermischbar und gut wasseremulgierbar sein, sollen jedoch nicht oder nur sehr langsam mit Isocyanaten reagieren. Geeignete Lösemittel sind beispielsweise Glykoldialkyether wie Glykoldimethylether, Ester wie Ethylglykolacetat, Ketone wie Aceton oder Dioxan oder N-Methylpyrrolidon. Bevorzugt werden Alkohole mit sterisch gehinderten Alkoholgruppen, Ketonalkohole oder Alkoxyalkanole wie Butoxyethanol, Butyldiglykol, Methoxyisopropanol oder Diacetonalkohol.

Bevorzugt wird mit diesen Lösemitteln kurz vor der Verarbeitung ohne Erwärmen eine Polyisocyanat-Lösung hergestellt, die bei einem Festkörper von über 40 Gew.-%, bevorzugt 50 - 95 Gew.-%, eine Viskosität von 0,5 bis 2000 mPa.s, bevorzugt 1 - 20 mPa.s hat.

Die Polyisocyanatlösung oder entsprechende flüssige Polyisocyanate werden unmittelbar vor der Applikation dem Wasserbasislack, z.B. unter Rühren, zugegeben. Der so modifizierte Wasserbasislack weist eine Topfzeit von 1 bis 6 Stunden auf.

Eine Applikation außerhalb der Topfzeit kann zu Blasenbildung im applizierten Überzug führen.

Die erfindungsgemäß eingesetzten modifizierten Basisbeschichtungsmittel können auf verschiedene Substrate nach üblichen Beschichtungsverfahren aufgebracht werden, beispielsweise durch Spritzen, Streichen oder Rakeln. Als Substrate kommen verschiedene Materialien in Frage, wie Metalle, Kunststoffe, Holz. Bevorzugt geeignet sind Metalle. Diese Substrate können auch einer Vorbehandlung unterzogen worden sein, wie beispielsweise einer Grundierung sowie des Auftrags von weiteren im Mehrschichtaufbau üblichen Schichten, wie Füllerschichten, Spachtelschichten und Zwischenschichten.

Die erfindungsgemäß verwendeten modifizierten Wasserbasislacke sind physikalisch trocknend, das heißt sie erfordern kein Einbrennen und können beispielsweise bei Temperaturen von 20 bis 60°C getrocknet werden. Sie können nach dem Aufbringen mit transparenten Decklacken beschichtet werden. Die Beschichtung kann naß-in-naß, nach kurzem Ablüften oder nach Trocknen der modifizierten Basislackschicht erfolgen. Die Trocknung der Klarlackschicht kann gemeinsam mit der Basislackschicht erfolgen. Als Klarlacke kommen neben wäßrigen Klarlacken, Pulverklarlacken und einkomponentigen Klarlacken auf Lösemittelbasis bevorzugt übliche lösemittelhaltige Zweikomponentenlacke auf Polyacrylat/Polyisocyanat-Basis in Frage. Derartige Klarlacke sind beispielsweise beschrieben in EP-A-0 320 719 und DE-A-37 31 652, EP-A-0 012 98 13.

Durch den Einsatz der sterisch gehinderten Di- und Polyisocyanate ergibt sich eine besonders gute Einarbeitbarkeit in die Basislacke; die Homogenität ist wesentlich besser als bei Verwendung von sterisch nicht-gehinderten Di- und Polyisocyanaten. Bei der Verwendung letzterer kommt es zur Stippenbildung; außerdem werden nur kurze Topfzeiten erzielt.

Mit den erfindungsgemäß modifizierten Wasserbasislacken auf Polyurethanbasis werden im Mehrschichtaufbau sehr gute Härten, insbesondere bei hohen Schichtdicken der Basislackschicht von 40 - 50 µm, und ausgezeichneter Glanz erzielt. Die Qualität einer solchen Mehrschichtlackierung ist vergleichbar mit einem entsprechenden Mehrschichtaufbau auf Basis konventioneller Basislacke.

Die erfindungsgemäß modifizierten Wasserbasislacke finden Anwendung in der Industrie-, Fahrzeug- und Fahrzeugteilelackierung für Metall- und Kunststoffbeschichtungen. Bevorzugt angewendet werden die wäßrigen Überzugsmittel in der Fahrzeugreparaturlackierung und der Erstlackierung von Fahrzeugen oder Fahrzeugteilen, insbesondere von Kraftfahrzeugen und Nutzfahrzeugen, bei Raumtemperatur bzw. forcierter Trocknung.

Die Erfindung soll an Hand der nachfolgenden Beispiele und Vergleichsbeispiele näher erläutert werden.

### Herstellungsbeispiel 1.

### Wäßrige Polyurethan-Dispersion

In einem Reaktionsgefäß mit Rührer, Innenthermometer, Heizung und Rückflußkühler werden 250 g eines linearen Polyesters (aufgebaut aus Adipinsäure, Isophthalsäure, Hexandiol, OH-Zahl 77, Säurezahl 10) mit 80 g Methylethylketon und 53,3 g N-Methylpyrrolidon auf 70°C erwärmt und bei dieser Temperatur 74 g hydriertes Bisphenol A sowie 28,3 g Dimethylolpropionsäure zugesetzt. Der Ansatz wird auf 120°C erwärmt und eine halbe Stunde bei dieser Temperatur gerührt. Anschließend werden bei 70°C 146,7 g Hexamethylendiisocyanat zugesetzt. Nach einer exothermen Phase (Temperatur < 90°C) wird der Ansatz so lange bei 70°C gehalten, bis die Restisocyanatzahlwerte kleiner als 1,8 sind. Die warme Harzmischung wird in 891 g entionisiertes Wasser und 23,5 g Triethylamin unter starkem Rühren dispergiert. Fünf Minuten nach Ende der Harzzugabe werden 10,5 g Propylendiamin-1,3 in 75 g entionisiertem Wasser zugesetzt und der Ansatz noch eine Stunde gerührt.

Es resultiert eine durchscheinende wäßrige Dispersion mit folgenden Kenndaten:
- Feststoffgehalt 30 %
- Viskosität (20°C) 109 mPa.s
- pH-Wert 9,8
- Säurezahl 27 (mg KOH pro g Festharz)
- Mn 34.000

### Herstellungsbeispiel 2

### Herstellung eines erfindungsgemäß verwendbaren modifizierten Metallic-Wasserbasislackes

Aus der in Herstellungsbeispiel 1 hergestellten wäßrigen Polyurethandispersion wird ein Metallic-Wasserbasislack mit folgenden Bestandteilen hergestellt:

| | |
|---|---|
| 35,5 | Teile der Dispersion gemäß Herstellungsbeispiel 1 |
| 47,7 | Teile Wasser |
| 2,0 | Teile n-Butanol |
| 8,1 | Teile Butylglykol |
| 0,3 | Teile eines handelsüblichen Korrosionsinhibitors zur Verhinderung der Aluminium-Gasung |
| 2,1 | Teile eines handelsüblichen Verdickers |
| 0,2 | Teile N,N-Dimethylethanolamin |
| 4,1 | Teile einer handelsüblichen Aluminium-Paste, 60 % Al (die Angaben sind auf das Gewicht bezogen) |

Es resultiert ein Metallic-Basislack mit einer Viskosität von ca. 30 s (DIN-Becher, 4 mm Düse, 23°C) und einem Festkörpergehalt von 15,9 %.

Anschließend wird eine Polyisocyanat-Lösung durch Vermischen folgender Bestandteile hergestellt:

| | |
|---|---|
| 40 | Teile Glykoldimethylether |
| 60 | Teile TMXDI |

Unmittelbar vor der Verarbeitung werden 8 Gew.-% der Polyisocyanat-Lösung, bezogen auf den Festkörpergehalt des Bindemittels, zum Metallic-Wasserbasislack zugegeben.

### Herstellungsbeispiel 3

### Herstellung eines erfindungsgemäß verwendbaren modifizierten Uni-Wasserbasislackes

Aus der in Herstellungsbeispiel 1 hergestellten wäßrigen Polyurethandispersion wird ein Uni-Wasserbasislack mit folgenden Bestandteilen hergestellt:

| | |
|---|---|
| 35,5 | Teile der Dispersion gemäß Herstellungsbeispiel 1 |
| 21,1 | Teile Wasser |
| 12,1 | Teile Butylglykol |
| 1,3 | Teile eines handelsüblichen Verdickers |
| 0,14 | Teile N,N-Dimethylethanolamin |
| 22,1 | Teile eines handelsüblichen Titandioxid-Pigmentes |
| 0,5 | Teile eines handelsüblichen Kupferphthalocyanin-Pigmentes |
| 0,16 | Teile eines handelsüblichen Entschäumers |
| 8,1 | Teile eines handelsüblichen Polyurethan-Anreibehilfsmittels |

(die Angaben sind auf das Gewicht bezogen)

Der resultierende Uni-Basislack zeigt eine Viskosität von ca. 45 s (DIN-Becker, 4 mm Düse, 23°C) und einen Festkörpergehalt von 39,8 %.

Anschließend wird eine Polyisocyanat-Lösung durch Vermischen folgender Bestandteile hergestellt:

| | |
|---|---|
| 40 | Teile Glykoldimethylether |
| 60 | Teile TMXDI |

Unmittelbar vor der Verarbeitung werden 8 Gew.-% der Polyisocyanat-Lösung, bezogen auf den Festkörpergehalt des Bindemittels, zum Uni-Wasserbasislack zugegeben.

### Vergleichsversuch A

Es wird ein Metallic-Wasserbasislack gemäß Herstellungsbeispiel 2 hergestellt, jedoch ohne Zusatz der Polyisocyanat-Lösung.

### Applikationsbeispiel 5

Mit den in den Herstellungsbeispielen 2 bis 3 und Vergleichsversuch A hergestellten Wasserbasislacken werden Lackierungen wie folgt durchgeführt:

**Lackieraufbau von zu bewertetenden Blechen:**
- Blankgeschliffenes Karosserieblech
- Praxisübliche 2K-Epoxi-Haftgrundierung
- Praxisüblicher 2K-Polyurethan-Füller
- Wasserbasislack
- Praxisüblicher 2K-Polyurethan-Klarlack (Acrylatbasis), Medium solid-Typ, FK 47 %
   2K = zweikomponenten; FK = Festkörpergewicht

### Applikation und Trocknung

- Spritzapplikation der Wasser-Basislacke
- 40 Minuten Vortrocknung bei Raumtemperatur
- Spritzapplikation des Klarlackes
- 10 Minuten ablüften bei Raumtemperatur
- 45 Minuten Trocknung bei 60°C

### Vergleichsversuch B

Zwecks Vergleich mit einem konventionellen Basislack wird eine zusätzliche Applikation vorgenommen. Dabei wird entsprechend Applikationsbeispiel 5 verfahren, jedoch anstelle der Wasserbasislacke wird ein üblicher konventioneller Basislack auf Celluloseacetobutyrat (CAB)Acrylat-Basis appliziert. Die Vortrocknung erfolgt 15 min. bei Raumtemperatur. Nach Applikation des Klarlackes erfolgt ein Ablüften von 10 min. bei Raumtemperatur und 45 min. Trocknung bei 60°C.

Die Eigenschaften der erhaltenen Lackierungen sind in der folgenden Tabelle zusammengestellt:

| | Wasserbasislack Herstellungsbei spiel 2 | | Wasserbasislack Vergleichsversuch A) | | Lösemittelhaltiger Basislack (Vergleichsversuch B) | |
|---|---|---|---|---|---|---|
| | metallic | uni | metallic | uni | metallic | uni |
| Glanz | 2 | 2 | 2-3 | 3 | 2 | 2 |
| Härte | | | | | | |
| nach 5 Std. | 3 | 3-4 | 3-4 | 4 | 3 | 3 |
| nach 3 Tagen | 2 | 2-3 | 3 | 3-4 | 2 | 2-3 |
| nach 7 Tagen | 1-2 | 2 | 3 | 3 | 1 | 1-2 |

Bewertung
1 = sehr gut
2 = gut
3 = bedingt brauchbar
4 = ungenügend

### Vergleichsversuch C

Die Vorteile des erfindungsgemäßen Einsatzes sterisch gehinderter Di- und Polyisocyanate gehen aus folgendem Vergleich hervor.

Zu dem nach Herstellungsbeispiel 2 erhaltenen Metallic-Wasserbasislack werden jeweils 10 Gew.-% (bezogen auf den Festkörperanteil des Bindemittels) einer Lösung aus 40 Gew.-Teilen Glykoldimethylether und 60 Gew.-Teilen Tetramethylxylylendiisocyanat (sterisch gehindertes Diisocyanat) und einer Lösung aus 40 Gew.-Teilen Glykoldimethylether und 60 Gew.-% eines handelsüblichen sterisch nicht-gehinderten Polyisocyanats (Urethdion auf der Basis von Hexandiisocyanat, Handelsprodukt Desmodur 2550) gegeben. Bei der Zugabe der Tetramethylxylylendiisocyanat enthaltenden Lösung ist der Ansatz nach 14 Stunden noch homogen und niedrig viskos; das Gemisch hat eine hohe Topfzeit. Das Gemisch, dem die Lösung des sterisch nicht-gehinderten Polyisocyanats zugesetzt wurde, beginnt nach 30 Minuten zu gasen und nach 12 Stunden geliert der Ansatz.

## Patentansprüche

1. Verfahren zur Herstellung einer Mehrschichtlackierung durch Auftrag einer Basislackschicht aus einem wäßrigen Überzugsmittel auf ein Substrat und anschließenden Auftrag einer Schicht aus einem organische Lösemittel enthaltenden Klarlack, dadurch gekennzeichnet, daß man zur Herstellung der Basislackschicht ein wäßriges Überzugsmittel aufträgt, das neben Wasser, einem oder mehreren Pigmenten, sowie gegebenenfalls einem oder mehreren organischen Lösemitteln, Neutralisationsmitteln und lacküblichen Additiven, als Bindemittel enthält
eine Kombination von
I) 99,5 bis 85 Gew.-% eines oder mehrerer wäßriger, physikalisch trocknender Polyurethan-Bindemittel mit einem derartigen Gehalt an OH-Gruppen und Säurefunktionen, daß die OH-Zahl 10 und die Säurezahl 30 nicht überschritten werden, wovon 10 bis 50 Gew.-%, bezogen auf das Festkörpergewicht der Komponente I) ersetzt sein können durch ein oder mehrere ungesättigte Reaktionsprodukte von carboxyfunktionellen Polykondensaten mit ethylenisch ungesättigten Monomeren, und
II) 0,5 bis 15 Gew.-% eines oder mehrerer bei Raumtemperatur flüssiger oder durch organische Lösemittel verflüssigter Polyisocyanate mit mehr als einer freien Isocyanatgruppe aus der Gruppe der Diisocyanate der allgemeinen Formel 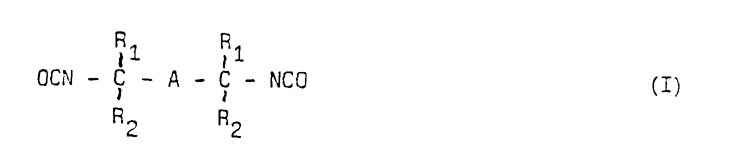 worin die Reste R₁ und R₂ jeweils gleich oder verschieden sein können und wobei
R₁ = -H oder -CₙH₂ₙ₊₁
R₂ = -CₙH₂ₙ₊₁
wobei n = eine ganze Zahl von 1 bis 6 und
A = eine einfache Bindung, ein aromatischer oder alicyclischer Rest, oder ein linearer oder verzweigter aliphatischer Rest mit 1 bis 12 Kohlenstoffatomen ist, deren Umsetzungsprodukte mit Wasser oder mehrwertigen Alkoholen, deren Uretdione, Isocyanurate und/Biurete, wobei bis 40 Gew.-% bezogen auf das Festkörpergewicht der Polyisocyanatkomponente II durch ein oder mehrere, bei Raumtemperatur flüssige oder durch organische Lösemittel verflüssigte, davon verschiedene Polyisocyanate mit mehr als einer freien Isocyanatgruppe ersetzt sein können,
wobei sich die Gew.-% der Komponenten I) und II) jeweils auf deren Festkörper beziehen und auf 100 Gew.-% addieren und wobei die Komponente II) dem Überzugsmittel kurz vor dessen Auftrag zugesetzt wird,
und daß man auf den so erhaltenen Basisüberzug nach dem Trocknen oder naß-in-naß die Klarlackschicht aufbringt und gegebenenfalls zusammen mit der Basislackschicht aushärtet.

2. Ein mit einer Mehrschichtlackierung versehenes Substrat, dadurch gekennzeichnet, daß die Mehrschichtlackierung nach dem Verfahren von Anspruch 1 erstellt wurde.

## Claims

1. A method of producing a multi-layer coating by the application of a base lacquer coat of an aqueous coating medium to a substrate and the subsequent application of a coat of a clear lacquer containing an organic solvent, characterised in that for the production of the base lacquer coat an aqueous coating medium is applied which, in addition to water, one or more pigments and also optionally one or more organic solvents, neutralising agents and customary lacquer additives, contains the following as binder vehicles:
a combination of
I) 99.5 to 85 % by weight of one or more aqueous, physically drying polyurethane binder vehicles with a content of OH groups and acid functions such that an OH number of 10 and an acid number of 30 are not exceeded, of which 10 to 50 % by weight, with respect to the weight of solids, of component I) can be replaced by one or more unsaturated reaction products of carboxy-functional polycondensates with ethylenically unsaturated monomers, and
II) 0.5 to 15 % by weight of one or more polyisocyanates which are liquid at room temperature or which are liquefied by organic solvents and which contain more than one free isocyanate group, from the group comprising diisocyanates of general formula 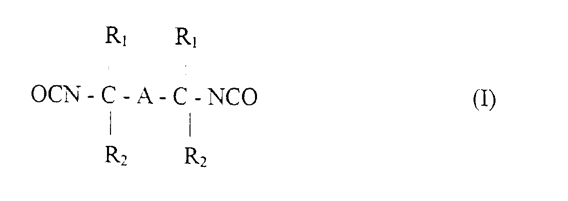 wherein the R₁ and R₂ radicals can each be the same or different, and wherein
R₁ = -H or -CₙH₂ₙ₋₁
R₂ = -CₙH₂ₙ₋₁
wherein n = an integer from 1 to 6, and
A = a single bond, an aromatic or alicyclic radical, or a linear or branched aliphatic radical containing 1 to 12 carbon atoms; or the reaction products thereof with water or polyhydric alcohols, or uretdiones, isocyanurates and/or biurets thereof, wherein 40 % by weight, with respect to the weight of solids, of polyisocyanate component II can be replaced by one or more polyisocyanates which are different therefrom, which are liquid at room temperature or which are liquefied by organic solvents, and which contain more than one free isocyanate group,
wherein the percentages by weight of components I) and II) are each given with respect to the solids content thereof and add up to 100 % by weight, and wherein component II) is added to the coating medium shortly before the application thereof,
and that the clear lacquer coat is applied to the base coating thus obtained after drying or wet-into-wet and is optionally hardened together with the base lacquer coat.

2. A substrate provided with a multi-layer coating, characterised in that the multi-layer coating has been produced by the method of claim 1.

## Revendications

1. Procédé pour la fabrication d'un revêtement multicouche par le dépôt d'une couche de base, constituée d'un matériau de revêtement aqueux, sur un substrat et ensuite par le dépôt d'une couche d'un vernis incolore contenant des solvants organiques, caractérisé en ce que, l'on applique à la préparation de la couche de base un matériau de revêtement aqueux, qui contient comme liant, en plus de l'eau, d'un ou de plusieurs pigments, ainsi qu'éventuellement d'un ou de plusieurs solvants organiques, agents de neutralisation et additifs usuels des vernis,
une combinaison de :
I) 99,5 à 85% en poids d'un ou de plusieurs liants aqueux à base de polyuréthanne, séchant physiquement, avec une teneur telle en groupes OH et en fonctions acides, qu'on ne dépasse pas l'indice OH de 10 et l'indice d'acide de 30, dont on peut remplacer 10 à 50% en poids par rapport au poids d'extraits secs du composant I) par un ou plusieurs produits de réaction insaturés de polycondensats carboxyfonctionnels avec des monomères éthyléniquement insaturés, et
II) 0,5 à 15% en poids d'un ou de plusieurs polyisocyanates liquides à température ambiante ou fluidifiés au moyen de solvants organiques, avec plus d'un groupe isocyanate libre choisi parmi les diisocyanates de formule générale 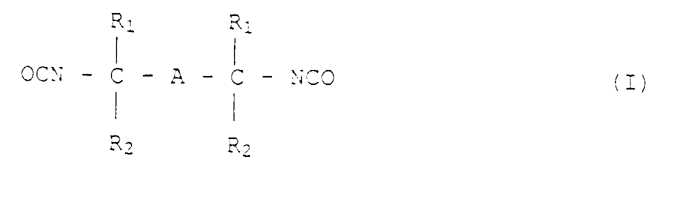 dans laquelle les groupes R₁ et R₂ peuvent être respectivement identiques ou différents et dans laquelle
R₁ = -H ou -CₙH₂ₙ₊₁
R₂ = -CₙH₂ₙ₊₁
formules dans lesquelles n = un nombre entier de 1 à 6 et
A = représente une simple liaison, un résidu aromatique ou alicyclique, ou un résidu aliphatique linéaire ou ramifié avec 1 à 12 atomes de carbone, ses produits de réaction avec l'eau ou des polyalcools, ses dérivés uretdione, isocyanurate et/ou biuret, dans lesquels on peut remplacer jusqu'à 40% en poids par rapport au poids d'extraits secs du constituant polyisocyanate II, par un ou plusieurs polyisocyanates différents de celui-ci avec plus d'un groupe isocyanate libre et liquides à température ambiante ou fluidifiés au moyen de solvants organiques,
dans laquelle les % en poids des composants I) et II) se rapportent respectivement à leurs extraits secs et s'additionnent à 100% en poids et dans laquelle le composant II) est ajouté au matériau de revêtement juste avant son dépôt,
et en ce qu'on dépose la couche de vernis incolore sur le revêtement de base ainsi obtenu après le séchage ou à l'état humide sur humide et en ce qu'on la durcit éventuellement en même temps que la couche de laque de base.

2. Substrat pourvu d'un revêtement multicouche, caractérisé en, ce que le revêtement multicouche a été fabriqué selon le procédé de la revendication 1.
